## Europäisches Patentamt
## European Patent Office
## Office européen des brevets

(19)

(11) Numéro de publication: **0 102 854**

**B1**

(12)

# FASCICULE DE BREVET EUROPÉEN

(45) Date de publication du fascicule du brevet:
24.09.86

(51) Int. Cl.⁴: **C 08 L 23/08**, C 08 J 5/18

(21) Numéro de dépôt: **83401034.0**

(22) Date de dépôt: **25.05.83**

(54) **Compositions de copolymères d'éthylène/alpha-oléfine et de polyéthylène de basse densité et leur application à la fabrication de films.**

(30) Priorité: **03.06.82 FR 8209633**

(43) Date de publication de la demande:
**14.03.84 Bulletin 84/11**

(45) Mention de la délivrance du brevet:
**24.09.86 Bulletin 86/39**

(84) Etats contractants désignés:
**AT BE CH DE FR GB IT LI LU NL SE**

(56) Documents cité:
**EP-A-0 006 110**
**EP-A-0 043 743**
**EP-A-0 070 220**
**FR-A-2 481 709**

**PATENTS ABSTRACTS OF JAPAN, vol. 1, no. 140, 16 novembre 1977, page 3033 C 77**

(73) Titulaire: **Société Chimique des Charbonnages S.A., Tour Aurore Place des Reflets, F-92080 Paris La Défense Cédex 5 (FR)**

(72) Inventeur: **Hert, Marius, 21 Chaussée Brunehaut Estrée Cauchy, F-62690 Aubigny en Artois (FR)**

(74) Mandataire: **Dubost, Thierry, SOCIETE CHIMIQUE DES CHARBONNAGES Service Propriété Industrielle B.P. 57, F-62670 Mazingarbe (FR)**

## Description

La présente invention a pour objet des compositions de polyéthylène radicalaire et de copolymères éthylène/ α -oléfine et leur application à la fabrication de films.

On connaît déjà des compositions de polyéthylène radicalaire (obtenu par le procédé haute pression) et de copolymères d'éthylène/α-oléfine (obtenus par le procédé basse pression). par exemple la demande de brevet européen n° 0006110 décrit des films, d'épaisseur comprise entre 5 et 500 microns, extrudés à partir de compositions comprenant de 1 à 20 % en poids de polyéthyléne radicalaire d'indice de fluidité compris entre 0,2 et 5 dg/min et de 80 à 99 % en poids d'un copolymère éthylène/α-oléfine de densité comprise entre 0,912 et 0,940, d'indice de fluidité compris entre 0,1 et 5 dg/min, d'indice de polydispersité (défini par le rapport $M_w/M_n$ de la masse moléculaire moyenne en poids à la masse moléculaire moyenne en nombre) compris entre 2,7 et 4,1 et ayant un taux d'insaturations global compris entre 0,1 et 0,3 doubles liaisons pour 1000 atomes de carbone. Le copolymère entrant dans ces compositions est fabriqué par un procédé à basse pression (10 à 70 bars) et à basse température (30° à 115°C). De tels copolymères présentent une structure parfaitement homogène, comme décrit dans le brevet français n° 1.604.980.

De même le brevet français n° 2.481.709 décrit le mélange de (a) 30 à 80 % en poids d'un copolymère d'éthylène et d'une α-oléfine ayant de 3 à 12 atomes de carbone, ledit copolymère ayant une densité inférieure à 0,945 et une viscosité intrinsèque à 135°C de 1,7 à 10 dg/g, et de (b) 20 à 70 % en poids d'un polyéthylène haute pression ayant une densité de 0,915 à 0,935 et une viscosité intrinsèque à 135°C inférieure à 1,3 dl/g. Il convient de noter que, pour un tel copolymère d'éthylène et d' α-oléfine, une viscosité intrinsèque à 135°C supérieure à 1,7 dg/g correspond à un indice de fluidité (selon la norme ASTM D 1238-73) inférieur à 0,3 dg/min.

Enfin le brevet américain n° 3.176.052 décrit un mélange homogène comprenant (a) de 5 à 75 % en poids de polyéthylène radicalaire ayant une densité de 0,91 à 0,94 et (b) de 25 à 95 % en poids d'un copolymère éthylène/α-oléfine ayant une densité supérieure à 0,92 et un indice de fluidité de 0,1 à 10 dg/min. Ce document enseigne que l'amélioration de la brillance d'un film extrudé obtenu à partir d'un tel mélange, par rapport aux films extrudés obtenus à partir de chaque constituant du mélange, est d'autant plus marquée que le polyéthylène radicalaire a un indice de fluidité plus élevé (3 à 10 dg/min selon les exemples) et que le copolymère éthylène/ α -oléfine a un indice de fluidité plus faible que le polyéthylène radicalaire (de 0,5 à 1,4 dg/min selon les exemples).

Le brevet européen n° 43743 concerne des compositions comprenant de 5 à 70 % en poids de polyéthylène radicalaire et de 30 à 95 % en poids de copolymère éthyle-propylène. La demande de brevet japonais n°52/86440 (1977) décrit l'addition des compositions pour film auto-adhésif comprenant (a) un copolymère éthylène/ α-oléfine ayant une densite inférieure à 0,93 et (b) un polyéthylène radicalaire, de (c) un copolymere éthylène/ α-oléfine ayant une densite de 0,93 à 0,96 et un indice de fluidité de 10 à 1.000 dg/min.

On connaît également des films extrudés à partir de polyéthylène radicalaire et dont l'épaisseur est généralement au moins égale à 20 microns. De manière surprenante, on a trouvé avantageux, selon la présente invention, de préparer des compositions comprenant de 2 à 25 % en poids de polyéthylène radicalaire et de 75 à 98 % en poids d'un copolymère éthylène/ α -oléfine ayant une structure particulièrement hétérogène. En effet de telles compositions, permettent la fabrication de films d'épaisseur inférieure ou égale à 20 microns et dont certaines propriétés sont améliorées par rapport aux deux constituants du mélange tout en s'affranchissant des contraintes et des limitations de l'art antérieur. Par exemple, il ne sera pas nécessaire que le copolymère éthylène/α-oléfine de la composition ait un indice de polydispersité compris entre 2,7 et 4,1, ni un taux d'insaturations global compris entre 0,1 et 0,3 doubles liaisons pour 1000 atomes de carbone. De même le copolymère éthylène/ α-oléfine de la composition n'aura pas nécessairement, comme dans le brevet français n° 2.481.709, un indice de fluidité inférieur à 0,3 dg/min (un tel indice étant généralement difficile à obtenir selon la plupart des procédés de copolymérisation connus).

Un premier objet de la présente invention est une composition comprenant de 2 à 25 % en poids d'au moins un polymère radicalaire d'éthylène de densité comprise entre 0,91 et 0,94 et de 75 à 98 % en poids d'au moins un copolymère d'éthylène et d'α-oléfines comprenant au moins 4 atomes de carbone, de densité comprise entre 0,905 et 0,940 et d'indice de fluidité compris entre 0,4 et 3 dg/min, la teneur moyenne en motifs α-oléfines dans le copolymère étant comprise entre 1 et 8 % en moles, caractérisée en ce que la distribution des motifs α-oléfines dans le copolymère est hétérogène, ledit copolymère comprenant des fractions cristallines et des fractions amorphes, et en ce que la teneur en motifs α -oléfines dans le copolymère varie entre au moins 0,2 et au plus 5 fois leur teneur moyenne selon les fractions considérées.

Ces copolymères de structure particulière, décrits dans la demande de brevet européen publiée sous le n° 0 070 220, peuvent subsidiairement être caractérisés en ce que leurs fractions cristallines présentent un pic de fusion compris entre 118° et 130°C et représentent de 20 à 50 % en poids du copolymère total. Ils peuvent aussi être subsidiairement caractérisés en ce que leur taux d'insaturation global est compris entre 0,25 et 0,50 doubles liaisons pour 1000 atomes de carbone, de préférence entre 0,32 et 0,45 doubles liaisons pour 1000 atomes de carbone. Dans la suite de la description, le terme copolymère sera employé pour désigner à la fois des polymères binaires comportant une α-oléfine en sus de l'éthylène etdes polymères ternaires ccmportant deux α-oléfines en sus de l'éthylène. Ces copolymères utilisables selon la présente invention peuvent être subsidiairement caractérisés par une masse moléculaire moyenne comprise entre 15.000 et 60.000 et/ou un indice de polydispersité compris entre 3 et 9 pour les polymères binaires, 4 à 12 pour les polymères ternaires. Dans la définition précédente il faut entendre, de manière conventionnelle dans la technique des polymères, la masse moléculaire moyenne comme étant la masse moléculaire moyenne en nombre Mn et l'indice de polydispersité comme étant le rapport Mw/mn de la masse moléculaire moyenne en poids à la masse moléculaire moyenne en nombre. D'autre part les α-oléfines pouvant entrer dans la constitution des copolymères hétérogènes selon l'invention sont par exemple le butène-1, l'hexène-1, le méthyl-4-pentène-1, l'octène-1. Lorsque deux α-oléfines sont simultanément présentes dans le copolymère selon l'invention (cas d'un terpolymère) leur teneur moyenne totale est, comme décrit précédemment, comprise entre 1 et 8 % en moles et en outre le rapport de leurs teneurs moyennes respectives est de préférence comprise entre 0,25 et 4. Ainsi par exemple un terpolymère éthylène/butène-l/hexène-1 selon l'invention comprenant en moyenne 95 % en moles de motifs éthylène pourra comprendre en moyenne de 1 à 4 % en moles de motifs butène-1 et en moyenne de 4 à 1% en moles de motifs hexène-1.

Par polymère radicalaire d'éthylène au sens de la présente invention on entend un produit obtenu par polymérisation sous haute pression (généralement 1000 à 4000 bars) et à haute température (140° et 350°C), en présence d'un initiateur de radicaux libres (tel que l'oxygène, les peroxydes ou les peresters), de l'éthylène et éventuellement d'au moins un monomère copolymérisable avec l'éthylène tel que par exemple l'oxyde de carbone, les acides carboxyliques éthyléniquement insaturés, les esters dérivés desdits acides et d'un alcool ayant de 1 à 8 atomes de carbone, l'anhydride maléique, l'acétate de vinyle, etc... Des polymères radicalaires particulièrement adaptés à la présente invention sont d'une part les homopolymères d'éthylène et d'autre part des copolymères d'éthylène comprenant jusqu'à 25 % en poids d'au moins un acrylate d'alkyle, ledit groupe alkyle ayant de 1 à 8 atomes de carbone. Dans le cadre de la présente invention on choisit de préférence un polymère radicalaire d'éthylène ayant un indice defluidité compris entre 0,2 et 4 dg/min.

Les deux types de polymères entrant comme constituants dans les compositions selon l'invention sont très facilement miscibles pour former des mélanges homogènes. Les compositions selon l'invention peuvent donc être préparées sans difficultés par l'une quelconque des techniques de mélange des polymères, notamment le mélange des granulés à l'étatsolide à température ambiante et le mélange à l'état fondu sous l'effet de la chaleur.

Un second objet de la présente invention est un film d'épaisseur compris entre 5 et 200 microns, obtenu à partir d'une composition telle que décrite précédemment. Un film selon l'invention présente certaines propriétés améliorées par rapport aux films constitués à partir de chaque polymère du mélange. Ces films se distinguent notamment par leur résistance à l'impact, la résistance à chaud des soudures, le trouble optique, les propriétés dynamométriques (résistance et allongement à la rupture) et la résistance au déchirement. Cependant, contrairement à l'enseignement du brevet américain n° 3.176.052 cité précédemment, la brillance optique des films selon l'invention n'est pas supérieure, mais inférieure, à celle de films obtenus à partir de chaque polymère du mélange. Cette situation est d'ailleurs sans inconvénient puisque, fort heureusement, la brillance des copolymères éthylène/ α -oléfine de structure hétérogène utilisés selon laprésente invention est très supérieure à celle des copolymères décrits dans le brevet américain n° 3.176.052.

Les films selon l'invention sont obtenus à partir des compositions selon l'invention par les techniques bien connues d'extrusion-soufflage ou d'extrusion à travers une filière plate. Ils trouvent de nombreuses applications dans l'industrie de l'emballage, notamment pour des sacs de congélation des aliments.

Les exemples suivants sont donnés à titre illustratif et non limitatif.

## EXEMPLES 1 à 4

On transforme en films, par extrusion-soufflage, des compositions comprenant:

(A) un copolymère éthylène/butène-1 d'indice de fluidité (mesuré selon la norme ASTM D 1238-73) égal à 0,8 dg/min, de masse volumique (mesurée selon la norme NF T 51-063) égale à 0,919 g/cm3, de masse moléculaire moyenne en nombre (mesurée par chromatographie de perméation de gel) égale à 43.000, d'indice de polydispersité Mw/Mn égal à 3,6, un taux d'insaturation global de 0,39 doubles liaisons pour 1000 atomes de carbone, un point de fusion de la fraction cristalline (déterminé par analyse enthalpique différentielle) égal à 122°C et dont l'hétérogénéité de la distribution du butène-1 (déterminée par un test de fractionnement du copolymère) s'exprime par le multiple (2,2 fois) et le sous-multiple (0,5 fois) de la teneur moyenne entre lesquels varie la teneur en motifs butène-1 selon les fractions considérées. Ce copolymère est obtenu conformément à l'exemple 5 de la demande de brevet européen publiée sous le n° 0 070 220.

(B) un homopolymère de l'éthylène, obtenu en présence d'un intitiateur de radicaux libres, de masse volumique 0,921 $g/cm^3$ et d'indice de fluidité 1,1 dg/min.

Les conditions de transformation sont les suivantes:

    température de la composition: 200°C

    vitesse de rotation de la vis d'extrusion: 80 tours/min.

    taux de gonflage: 3,0.

Dans le tableau I figurent, outre la proportion en poids du copolymère (A) dans la composition, les résultats des mesures, sur des films d'épaisseur 50 microns, des propriétés suivantes:

- résistance à la rupture dans le sens longitudinal RRL (exprimée en $kg/cm^2$) et allongement à la rupture dans le sens transversal ART (exprimée en %) déterminés selon la norme ASTM D 882-67,

- résistance à chaud des soudures RCS (exprimée en g/mm), déterminée selon la norme TAPPI T 683 SU 72.

Dans le même tableau figure également, pour chaque composition, la limite d'étirabilité industrielle (EI), exprimée en microns, c'est-à-dire l'épaisseur la plus faible qui permette de maintenir une fabrication continue sans rupture de la gaine de film pendant une durée de 2 heures.

## TABLEAU I

| Exemple | (A) % | RRL | ART | RCS | EI |
|---------|-------|-----|-----|------|----|
| 1 | 100 | 210 | 710 | 15,5 | 8 |
| 2 | 90 | 210 | 700 | 21,0 | 9 |
| 3 | 75 | 210 | 680 | 22,5 | 11 |
| 4 | 0 | 150 | 415 | 1,5 | 30 |

Comme on le comprend aisément, les exemples 1 et 4 sont comparatifs. On remarque notamment que les propriétés dynamométriques et la résistance à chaud des soudures des compositions selon l'invention sont, de façon inattendue, supérieures à la moyenne arithmétique des propriétés de chacun des polymères purs qu'elles comprennent. L'étirabilité industrielle des compositions selon l'invention est, de façon avantageuse et inattendue, inférieure à la moyenne arithmétique de l'étirabilité industrielle de chacun des polymères purs qu'elles comprennent.

## EXEMPLES 5 à 7

On transforme en films, par extrusion-soufflage, des compositions comprenant:

(A) le copolymère hétérogène utilisé dans les exemples précédents, et (B) un homopolymère de l'éthylène, obtenu en présence d'un initiateurde radicaux libres, de masse volumique 0,923 g/cm3 et d'indice de fluidité 0,3 dg/min.

Les conditions de transformation sont les mêmes que précédemment, à l'exception de la température de la composition (205°C).

Dans le tableau II figurent, outre la proportion en poids du copolymère (A) dans la composition et l'étirabilité industrielle EI, les résultats des mesures sur des films d'épaisseur 50 microns, des propriétés précédentes ainsi que du trouble optique T (exprimé en %) selon la norme ASTM D 1003) et de la brillance optique B (exprimée en %) selon la norme ASTM D 2457).

## TABLEAU II

| Exemple | (A) % | RRL | ART | RCS | T | EI | B |
|---------|-------|-----|-----|------|------|----|----|
| 5 | 90 | 210 | 690 | 15,5 | 7,4 | 12 | 92 |
| 6 | 75 | 210 | 655 | 17,5 | 10,0 | 12 | 79 |
| 7 | 0 | 180 | 300 | 2 | | 90 | 48 |

A titre de comparaison, il est précisé qu'un film de même épaisseur et obtenu dans les mêmes conditions à partir du copolymère (A) pur présente un trouble T de 10,5 % et une brillance B de 99 %.

## EXEMPLES 8 à 10

On transforme en films, par extrusion-soufflage, des compositions comprenant:

(A) le copolymère hétérogène utilisé dans les exemples précédents, et (D) un homopolymère de l'éthylène, obtenu en présence d'un initiateur de radicaux libres, de masse volumique 0,924 g/cm3 et d'indice de fluidité 2 dg/min.

Les températures de transformation sont les mêmes que précédemment, à l'exception de la température de la composition (170°C).

Dans le tableau III figurent outre la proportion en poids du copolymère (A) dans la composition et l'étirabilité industrielle EI, les résultats des mesures, sur des films d'épaisseur 50 microns, des propriétés précédentes ainsi que de la résistance à l'impact RI (exprimée en g/μ) déterminée selon la norme ASTM D 1709-67.

## TABLEAU III

| Exemple | (A) % | RCS | T | RI | El | B |
|---------|-------|------|-----|-----|----|------|
| 8 | 90 | 15,5 | 7,7 | 3,0 | 8 | 95,5 |
| 9 | 75 | 15 | 6,7 | 2,9 | 9 | 92,5 |
| 10 | 0 | 2,5 | 6,0 | 1,9 | 20 | 99,0 |

A titre de comparaison il est précisé que le copolymère (A) pur présente une résistance à l'impact égale à 3,0 g/ μ.

## EXEMPLES 11 à 14

On transforme en films, par extrusion-soufflage, des compositions comprenant:

(A) un copolymère éthylène/butène-1 similaire à celui utilisé dans les exemples précédents, à l'exception de son indice de fluidité (égal à 0,9 dg/min) et de sa masse volumique (égale à 0,930 g/cm3), et

(E) un copolymère éthylène/acrylate de butyle, comprenant 17,5 % en poids d'acrylate, ayant un indice de fluidité de 1,7 dg/min et une masse volumique de 0,925 g/cm3.

Les conditions de transfonmation sont les suivantes:

- température de la composition: 250°C
- vitesse de rotation de la vis d'extrusion: 60 tours/min.
- taux de gonflage: 3,0.

Dans le tableau IV ci-après figurent, outre la proportion en poids du copolymère (A) dans la composition, la résistance à la rupture longitudinale RRL, l'allongement à la rupture transversal ART, ainsi que la résistance au déchirement longitudinal RDL et transversal RDT (exprimée en grammes) déterminée selon la norme ASTM D 1922-67.

## TABLEAU IV

| Exemple | (A) % | RRL | ART | RDL | RDT |
|---------|-------|-----|-----|-----|-----|
| 11 | 100 | 253 | 867 | 135 | 269 |
| 12 | 95 | 257 | 938 | 141 | 381 |
| 13 | 90 | 260 | 902 | 182 | 440 |
| 14 | 80 | | | 257 | 565 |

## Revendications

1. Composition comprenant de 2 à 25 % en poids d'au moins un polymère radicalaire d'éthylène de densité comprise entre 0,91 et 0,94 et de 75 à 98 % en poids d'au moins un copolymère d'éthylène et d'α -oléfines comprenant au moins 4 atomes de carbone, de densité comprise entre 0,905 et 0,940 et d'indice de fluidité compris entre 0,4 et 3 dg/min, la teneur moyenne en motifs α-oléfines dans le copolymère étant comprise entre 1 et 8 % en moles, caractérisée en ce que la distribution des motifs α-oléfines dans le copolymère est hétérogène, ledit copolymère comprenant des fractions cristallines et des fractions amorphes, et en ce que la teneur en motifs α-oléfines dans le copolymère varie entre au moins 0,2 et au plus 5 fois leur teneur moyenne selon les fractions considérées.

2. Composition selon la revendication 1, caractérisée en ce que le polymère radicalaire d'éthylène a un indice de fluidité compris entre 0,2 et 4 dg/min.

3. Composition selon l'une des revendications 1 et 2, caractérisée en ce que les fractions cristallines du copolymère présentent un pic unique de fusion compris entre 118° et 130°C et représentent de 20 à 50 % en poids du copolymère total.

4. Composition selon l'une des revendications 1 à 3, caractérisée en ce que le copolymère d'éthylène et d'α-oléfines a une masse moléculaire comprise entre 15.000 et 60.000.

5. Composition selon l'une des revendications 1 à 4, caractérisée en ce que le copolymère comporte une seule α-oléfine et en ce que son indice de polydispersité est compris entre 3 et 9.

6. Composition selon l'une des revendications 1 à 5, caractérisée en ce que le copolymère comporte deux α-oléfines dont le rapport des teneurs moyennes respectives est compris entre 0,25 et 4.

7. Composition selon la revendication 6, caractérisée en ce que l'indice de polydispersité du copolymère est compris entre 4 et 12.

8. Composition selon l'une des revendications 1 à 7, caractérisée en ce que les α-oléfines sont choisies pairmi le butène-1, l'hexène-1, le méthyl-4-pentène-1 et l'octène-1.

9. Composition selon l'une des revendications 1 à 8, caractérisée en ce que le polymère radicalaire d'éthylène est un copolymère d'éthylène et d'au moins un comonomère choisi parmi l'oxyde de carbone, les acides carboxyliques éthyléniquement insaturés, les esters dérivés desdits acides et d'un alcool ayant de 1 à 8 atomes de carbone, l'anhydride maléique et l'acétate de vinyle.

10. Composition selon la revendication 9, caractérisée en ce que le polymère radicalaire d'éthylène est un copolymère d'éthylène comprenant jusqu'à 25 % en poids d'au moins un acrylate d'alkyle, ledit groupe alkyle ayant de 1 à 8 atomes de carbone.

11. Composition selon l'une des revendications 1 à 10, caractérisée en ce que le taux d'insaturation global du copolymère d'éthylène et d'α-oléfines est compris entre 0,25 et 0,50 doubles liaisons pour 1000 atomes de carbone.

12. Application d'une composition selon l'une des revendications 1 à 11 à la fabrication de films d'épaisseur comprise entre 5 et 200 microns.

## Patentansprüche

1. Zusammensetzung enthaltend 2 bis 25 Gew.-% mindestens eines Äthylen-Radikalpolymers einer Dichte zwischen 0,91 und 0,94 und 75 bis 90 Gew.-% mindestens eines Copolymers von Äthylen und α-Olefinen mit mindestens 4 Kohlenstoffatomen, wobei das Copolymer eine Dichte zwischen 0,905 und 0,940 und einen Fließindex zwischen 0,4 und 3 dg/min besitzt und der mittlere Gehalt an α-Olefin-Einheiten im Copolymer zwischen 1 und 8·Mol.-% betrÄgt dadurch gekennzeichnet, daß die Verteilung der α-Olefin-Einheiten in dem Copolymer heterogen ist, wobei das Copolymer kristalline und amorphe Fraktinen enthÄlt und daß der Gehalt an α-Olefin-Einheiten im Copolymer je nach den in Betracht gezogenen Fraktionen zwischen mindestens dem 0,2 fachen und hÖchstens dem 5 fachenihres mittleren Gehaltes schwankt.

2. Zusammensetzung nach·Anspruch 1, dadurch gekennzeichnet, daß das äthylen-Radikalpolymer einen Fließindex zwischen 0,2 und 4 dg/min besitzt.

3. Zusammensetzung nach·Anspruch 1 oder 2, dadurch gekennzeichnet, daß die kristallinen Fraktionen des Copolymers einen einzigen Schmelzpunkt zwischen 118° und 130°C besitzen und 20 bis 50 Gew.-% des gesamten Copolymers ausmachen.

4. Zusammensetzung nach einem der Ansprüche 1 bis 3, dadurch gekennzeichnet, daß das Copolymer von äthylen und α-Olefinen eine Molekularmasse zwischen 15.000 und 60.000 besitzt.

5. Zusammensetzung nach einem der Ansprüche 1 bis 4, dadurch gekennzeichnet, daß das Copolymer ein einziges α-Olefin enthÄlt und seine PolydispersitÄtszahl zwischen 3 und 9 liegt.

6. Zusammensetzung nach einem der Ansprüche 1 bis 5, dadurch gekennzeichnet, daß das Copolymer zwei α-Olefine enthÄlt, wobei das VerhÄltnis der betreffenden mittleren Gehalte zwischen 0,25 und 4 betrÄgt.

7. Zusammensetzung nach·Anspruch 6, dadurch gekennzeichnet, daß die PolydispersitÄtszahl des Copolymers zwischen 4 und 12 liegt.

8. Zusammensetzung nach einem der Ansprüche 1 bis 7, dadurch gekennzeichnet, daß die α-Olefine ausgewÄhlt sind aus der Gruppe bestehend aus Buten-1, Hexen-1, Methyl-4-penten-1 und Octen-1.

9. Zusammensetzung nach einem der Ansprüche 1 bis 8, dadurch gekennzeichnet, daß das äthylen-Radikalpolymer ein Copolymer von äthylen und mindestens einem Monomer ist das ausgewÄhlt ist aus der Gruppe bestehend aus Kohlenmonoxid, den Äthylenisch ungesÄttigten KarbonsÄuren, den von den genannten SÄuren und einem Alkohol mit 1 bis 8 Kohlenstoffatomen abgeleiteten Estern, MaleinsÄureanhydrid und Vinylacetat.

10. Zusammensetzung nach Anspruch 9, dadurch gekennzeichnet, daß das äthylen-Radikalpolymer ein äthylencopolymer ist, das bis zu 25 Gew.-% mindestens eines Aikylacrylats enthÄlt, wobei die Alkylgruppe 1 bis 8 Kohlenstoffatome besitzt.

11. Zusamrnensetzung nach einem der Ansprüche 1 bis 10, dadurch gekennzeichnet, daß der Gesamt-UngesÄttigtheitsgrad des Copolymers von äthylen und α-Olefinen zwischen 0,25 und 0,50 Doppelbindungen auf 1000 Kohlenstoffatome betrÄgt.

12. Verwendung einer Zusammensetzung nach einem der Ansprüche 1 bis 11 bei der Herstellung von Filmen einer Dicke zwischen 5 und 200 µm.

## Claims

1. A composition comprising from 2 to 25 weight percent of at least one free radical ethylene polymer with a specific gravity between 0.91 and 0.94, and from 75 to 98 weight percent of at least one copolymer of ethylene and α-olefins containing at least 4 carbon atoms, with a specific gravity between 0.905 and 0.904 and a melt index between 0.4 and 3 dg/min., wherein the average proportion of α-olefin units in the copolymer is between 1 and 8 mole percent, characterized in that the disbribution of the α-olefin units in the copolymer is heterogeneous, the copolymer comprising crystalline fractions and amorphous fractions, and the proportion of α-olefin units in the copolymer varies between at least 0.2 and at most 5 times the average proportion, depending on the fractions considered.

2. The composition of claim 1, characterized in that said free radical ethylene polymer has a melt index between 0.2 and 4 dg/min.

3. A composition according to claim 1 or claim 2, characterized in that said crystalline fractions of said copolymer have a single melting peak between 118°C and 130°C and represent from 20 to 50 weight percent of the total copolymer.

4. A composition according to one of claims 1 to 3, characterized in that said ethylene/α-olefin copolymer has a molecular weight of between 15,000 and 60,000.

5. A composition according to one of claims 1 to 4, characterized in that said copolymer contains a single α-olefin and the polydispersity index of said copolymer is between 3 and 9.

6. A composition according to one of claims 1 to 4, characterized in that said copolymer

contains two α -olefins, and wherein the respective average proportions of said α-olefins are in a ratio between 0.25 and 4.

7. The composition of claim 6, characterized in that said copolymer has a polydispersity index between 4 and 12.

8. A composition according to one of claims 1 to 7, characterized in that said α -olefins are selected from the group consisting of but-1-ene, hex-1-ene, 4-methylpent-1-ene and oct-1-ene.

9. A composition according to one of claims 1 to 8, characterized in that said free radical ethylene polymer is a copolymer of ethylene and at least one comonomer selected from the group consisting of carbon monoxide, ethylenically unsaturated carboxylic acids, esters derived from said acids and from alcohol having from 1 to 8 carbon atoms, maleic anhydride, and vinyl acetate.

10. The composition of claim 9, characterized in that said free radical ethylene polymer is an ethylene copolymer comprising up to 25 weight percent at least one alkyl acrylate, said alkyl group having from 1 to 8 carbon atoms.

11. A composition according to one of claims 1 to 10, characterized in that the overall degree of unsaturation of the ethylene/ α-olefin copolymer is between 0.25 and 0.50 double bonds per 1,000 carbon atoms.

12. Application of a composition according to one of claims 1 to 11 to the manufacture of films having a thickness of between 5 and 200 microns.